Europäisches Patentamt

European Patent Office

Office européen des brevets

(19)

(11) Numéro de publication : **0 588 720 A1**

(12) ## DEMANDE DE BREVET EUROPEEN

(21) Numéro de dépôt : **93402253.4**

(22) Date de dépôt : **16.09.93**

(51) Int. Cl.⁵ : **G06F 15/72**

(30) Priorité : **18.09.92 FR 9211148**

(43) Date de publication de la demande :
**23.03.94 Bulletin 94/12**

(84) Etats contractants désignés :
**DE GB**

(71) Demandeur : **COMMISSARIAT A L'ENERGIE ATOMIQUE**
**31/33, rue de la Fédération**
**F-75015 Paris Cédex 15 (FR)**

(72) Inventeur : **Azevedo, Stephen**
**543 South Livermore Avenue**
**Livermore, California 94550 (US)**
Inventeur : **Grangeat, Pierre**
**136, Allée des Vignes du Persan**
**F-38330 Saint-Ismier (FR)**
Inventeur : **Rizo, Philippe**
**Le Nid, Chantemerle**
**F-38700 La Tronche (FR)**

(74) Mandataire : **Ilgart, Jean-Christophe**
**c/o Société Brevatome, 25, rue de Ponthieu**
**F-75008 Paris (FR)**

(54) **Procédé et appareil de reconstruction d'images tridimensionnelles d'une région d'intérêt d'un objet.**

(57) Procédé et installation permettant de reconstituer des images précises d'une région d'intérêt (2) d'un objet (1) en réduisant les erreurs produites par la contribution du complément de l'objet.

On compléte une première série de mesure où un faisceau conique (10) n'embrasse que la region d'intérêt de l'objet (2) par une seconde série de mesures dans lesquelles le faisceau embrasse tout l'objet. Une combinaison des mesures des deux séries est entreprise pour les rendre compatibles et obtenir une image plus exacte de la région d'intérêt (2).

L'invention s'applique à l'imagerie médicale et aux contrôles dans l'industrie.

FIG.1

EP 0 588 720 A1

L'invention se rapporte à un procédé de reconstruction d'images tridimensionnelles d'une région d'intérêt d'un objet et comporte une combinaison de mesures prises sur l'ensemble de l'objet à des mesures prises sur une région d'intérêt de l'objet, ainsi qu'à une installation appropriée.

On connaît déjà des procédés dans lesquels on ne s'intéresse qu'à la reconstruction d'images bidimensionnelles sur une région d'intérêt d'un objet plus volumineux, comme un organe dans le corps humain. On procède le plus simplement en prenant une série de mesures unidimensionnelles sur des coupes à des orientations différentes autour de l'objet, puis en combinant les résultats des mesures de manière appropriée, comme si on devait reconstruire l'image de tout l'objet, mais le réseau unidimensionnel (linéaire) de détecteurs responsable de la prise des mesures est alors disposé de manière à ne recevoir sensiblement que du rayonnement, émis par une source, qui a traversé la région d'intérêt de l'objet suivant la coupe considérée (ou, de manière équivalente, du rayonnement émis par cette région d'intérêt). La reconstruction des images bidimensionnelles est possible quand un nombre suffisant de vues a été pris en faisant tourner le réseau de détecteurs autour de l'objet, puis les images tridimensionnelles sont obtenues par une superposition d'images bidimensionnelles prises sur des coupes voisines. Mais on recueille à chaque mesure la contribution de parties de l'objet situées hors de la région d'intérêt, devant ou derrière elle dans le champ de vision des détecteurs, et ces parties sont différentes pour chaque orientation des détecteurs du fait que l'on ne dispose pas des mesures sur les parties de l'objet situées de part et d'autre de la région d'intérêt. De telles mesures sont appelées des mesures tronquées de l'objet et provoquent des erreurs inévitables de reconstruction, contrairement aux procédés où le champ de vue des détecteurs embrasse la totalité de l'objet, mais cela augmenterait la complexité du détecteur, son encombrement et son coût ou conduirait à une moins bonne résolution de l'image de la région d'intérêt si on conservait le même détecteur.

Diverses méthodes ont déjà été proposées dans le cas d'un rayonnement plan en éventail et d'une reconstitution de l'objet par tranches superposées pour corriger les erreurs de troncature, au moins partiellement. Dans l'une d'entre elles, exposée dans le brevet britannique 2 088 670, on effectue deux séries de mesures : les mesures à travers la région d'intérêt de l'objet et des mesures effectuées à travers tout l'objet, à une intensité de rayonnement beaucoup plus faible afin de ne pas irradier excessivement. La seconde série de mesures fournit les informations aux basses fréquences ou à basse résolution sur l'objet qui permettent de compléter les images de la région d'intérêt obtenues grâce à la première série de mesures tronquées. D'autres procédés consistent à introduire dans les calculs de combinaison des mesures des estimations des résultats pour les parties de l'objet exclusives de la région d'intérêt, ou simplement la position du contour extérieur de l'objet et à "extrapoler" alors les sommes d'émission ou d'atténuation du rayonnement qui ont été recueillies pendant les mesures sur toute la surface enclose par le contour (article d'Ogawa, Nakajima et Yuta intitulé "A reconstruction algorithm from truncated projections" paru dans IEEE Transactions on Medical Imaging, vol. MI-3, n°1, Mars 1984, p.34 à 40).

L'invention s'applique cependant à des mesures faites avec un rayonnement conique et qui présente un point focal, source ponctuelle de rayonnement ou point de convergence des collimateurs associés aux détecteurs, et les méthodes précédentes deviennent impossibles du fait qu'entre les deux séries de mesures, lorsque la trajectoire du point focal change, les droites d'acquisition ne peuvent être mises en correspondance et qu'il faudrait reconstruire les mesures complètes et les reprojeter dans la géométrie des mesures tronquées, ce qui est très coûteux en temps de calcul.

Le procédé original qui est présenté ici permet d'effectuer deux séries de mesures pour un objectif comparable à celui des méthodes précédentes mais avec un rayonnement conique, et l'invention se rapporte aussi à une installation qui permet d'accomplir facilement ce procédé.

Le procédé conforme à l'invention peut être considéré comme un perfectionnement du brevet antérieur EP-A-0 292 402 et peut être utilisé dans les situations décrites dans des perfectionnements antérieurs sujets des brevets EP-A-0 488 888 et 0 488 889. On peut aussi envisager l'emploi de l'invention pour des procédés un peu différents, tels que ceux qui comportent le calcul de la transformée de Radon (ou de la transformée de Hilbert de la dérivée première de la transformée de Radon) plutôt que de sa dérivée première, ce qui est le sujet du premier brevet cité.

L'invention est relative à un procédé de reconstruction d'images tridimensionnelles d'un objet défini par des valeurs prises par une fonction sur des points de l'objet, la fonction étant une propriété d'un rayonnement conique ayant un point focal et passant à travers l'objet, dans lequel deux séries de mesures sont entreprises, chacune des séries de mesures étant menée avec un réseau bidimensionnel de détecteurs de rayonnement orientés vers le point focal, les mesures consistant en des sommes prises par la fonction sur des rayons entre le point focal et les détecteurs et le procédé comprenant un algorithme d'inversion calculant des sommations de la fonction sur des plans passant par l'objet, caractérisé en ce qu'une première des séries est menée de manière que le rayonnement reçu par les détecteurs passe à travers une région d'intérêt de l'objet, l'image reconstruite concernant la région d'intérêt de l'objet, la seconde des séries de mesures est menée de manière que le rayonnement reçu par les détecteurs passe à travers tout l'objet, les mesures de la deuxième série complétant les mesures de la première série avant d'utiliser l'algorithme d'inversion.

Sous une forme avantageuse, le point focal parcourt une trajectoire identique pendant les deux séries de mesures.

Sous une autre forme de l'invention, les trajectoires du point focal sont différentes, le point focal effectue une première trajectoire proche de l'objet pendant la première série et une seconde trajectoire eloignée de l'objet pendant la seconde série, et les mesures de la seconde séri e sont réarrangées par des calculs de manière à obtenir des sommes de la fonction calculées suivant les points de l'objet sur des lignes joignant la première trajectoire et passant par l'objet entier, les mesures de la fonction réarrangées par calcul étant utilisées pour compléter les mesures de la première série.

Il est alors avantageux que les calculs de réarrangement des mesures de la seconde série comprennent une pondération des mesures, des mesures pondérées, une dérivation des sommations suivant des lignes et des colonnes du réseau de détecteur, une sommation des dérivées des projections pondérées suivant des plans et une combinaison linéaire des résultats obtenus respectivement pour les dérivées suivant les lignes et suivant les colonnes du réseau de détecteurs, un réarrangement pour se ramener au paramètrage en coordonnées sphériques des plans du domaine de Radon comme décrit dans le brevet antérieur EP-A-0 292 402, une transformée de Hilbert des sommations dérivées réarrangées et des sommes des transformées de Hilbert des sommations dérivées réarrangées sur des cercles perpendiculaires aux lignes sur lesquelles les sommes de la fonction sont reconstituées, les cercles passant par l'origine et par ces lignes en deux points diamétralement opposés.

L'installation conçue pour appliquer de tels procédés comporte des moyens pour faire accomplir deux rotations du système d'acquisition, défini par le point focal et le réseau de détecteur, autour de l'objet, de manière à décrire deux séries d'acquisition avec des géométries coniques différentes.

De manière équivalente, on pourra considérer un système d'acquisition à point focal et détecteur fixe et un objet en rotation dans le système d'acquisition.

On va maintenant décrire plus en détail à l'aide des figures suivantes annexées à titre illustratif et non limitatif :

- la figure 1 représente un dispositif conforme à l'invention avec deux trajectoires distinctes du point focal par rapport à l'objet, le système d'acquisition étant fixe et l'objet étant en rotation dans le système d'acquisition ;
- la figure 2 représente l'organigramme général du procédé ;
- la figure 3 est une représentation graphique des cercles de sommation selon lesquels les sommes de fonction sont reconstituées, dans le cas particulier de droites perpendiculaires à l'axe de rotation ;
- la figure 4 est une représentation graphique des cercles de sommation selon lesquels les sommes de la fonction sont reconstituées, dans le cas général ;
- la figure 5 explique la notion de zones d'ombre ;
- les figures 6 et 7 représentent d'autres dispositifs conformes à l'invention ;
- et les figures 8a, 8b et 8c illustrent trois façons différentes de réaliser l'invention.

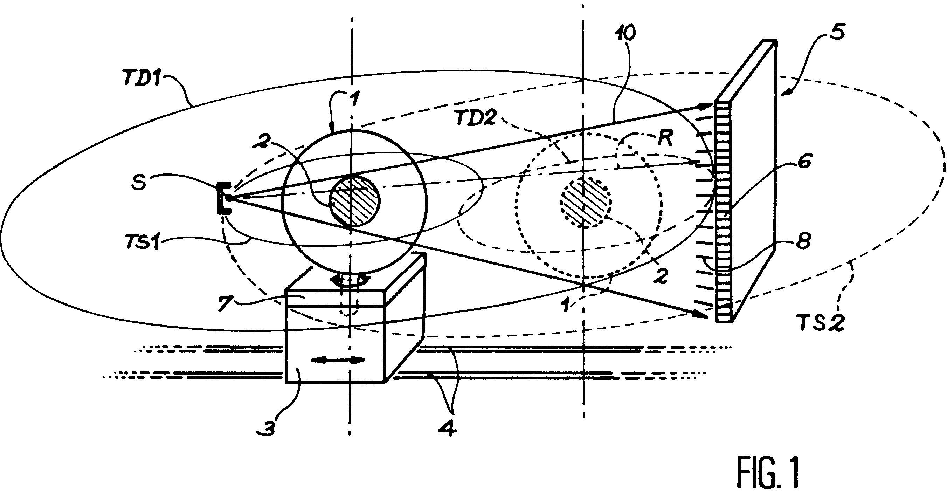

On se rapporte d'abord à la figure 1. L'objet 1 est représenté sous forme d'une boule et la région d'intérêt 2 est en forme de noyau sphérique vers le centre de l'objet 1. Elle peut être d'une autre forme, notamment cylindrique, et l'objet 1 aussi, mais cela ne change rien à la généralité de la méthode car il suffit de considérer comme objet 1 la sphère englobant l'objet et comme région d'intérêt 2 une sphère englobée par les mesures. Il est de toute façon normal de représenter les images de la région d'interêt 2 à partir d'un volume de mesures de forme simple, modélisé par des points définis par des coordonnées cartésiennes ou sphériques régulières.

L'objet 1 est monté sur un bâti 3 qui peut glisser sur des rails 4 et être arrêté en un endroit quelconque de ceux-ci. Un réseau plan 5 de détecteurs 6 est orienté vers l'objet 1. Le système de mesure est conçu de telle manière qu'on associe à chaque point d'image du détecteur 6 une droite de mesure issue de la source 9 ponctuelle de rayonnement située au-delà de l'objet 1. Les mesures consistent à faire tourner un plateau 7 du bâti 3, sur lequel l'objet 1 est posé, autour d'un axe vertical afin que l'objet 1 présente toutes ses faces au réseau de détecteurs 5. Tout se passe comme si le point focal S et le réseau de détecteurs 5 accomplissaient des trajectoires circulaires TS1 et TD1 par rapport à l'objet 1, supposé alors immobile, et centrées sur l'axe de rotation. Dans la position représentée, l'objet 1 est beaucoup plus proche de la source 9 de sorte que le faisceau utile 10 qu'elle produit, c'est-à-dire la partie du faisceau qui impressionne les détecteurs 6, n'embrasse que la région d'intérêt 2 de l'objet 1 dans les différentes mesures de la première série.

Dans une seconde série de mesures, le bâti 3 est déplacé pour que l'objet 1 soit dans la position représentée en pointillés et éloignée de la source 9 où le faisceau utile 10 embrasse désormais tout l'objet 1. Les nouvelles trajectoires équivalentes du point focal S et du réseau de détecteurs 5 autour d'un objet immobile sont référencées par TS2 et TD2. Cette série de mesures qui représente une ouverture angulaire faible et fournit des données complètes tient compte de la contribution de chacun des points de l'objet à l'atténuation du rayonnement et fournit donc moins d'erreurs de reconstruction d'images que la première série, mais une moins bonne résolution pour la région d'intérêt 2 du fait du plus faible facteur de grossissement. C'est pourquoi il convient de combiner ces deux séries de mesures selon les modalités qui vont maintenant être expliquées. Il faut remarquer au passage que bien d'autres installations sont compatibles avec le procédé : il est possible en particulier que le faisceau utile 10 ne soit pas produit par une source 9, mais par l'objet 1 lui-même, ce qui arrive si l'objet 1 est un organisme vivant ayant ingéré à cet effet un produit marqueur radioactif ; il faut simplement que les détecteurs 6 soient munis d'un collimateur dont les trous sont focalisés vers le point focal S pour que les conditions d'utilisation de l'invention soient préservées. Il peut alors être avantageux de ne pas prévoir de moyens tels que les rails 4 pour rapprocher ou éloigner l'objet 1 du réseau de détecteurs 5, et de remplacer avant la seconde série de mesures le système de collimation 8 par un autre qui déplace le point focal S en l'éloignant de l'objet 1. Le point S peut même alors être placé à l'infini et permettre d'utiliser des rayons parallèles. Le cône du faisceau peut alors être choisi avec une moins grande ouverture, ce qui peut améliorer grandement la reconstruction de l'image en réduisant ou en supprimant complètement une zone d'ombre des résultats, comme on l'expliquera plus tard.

L'objet 1 peut aussi être fixe - ce qui est surtout avantageux quand il émet lui-même le rayonnement - et le réseau de détecteurs 5 accroché à un rail circulaire qui entoure l'objet 1. On peut prévoir deux rails circulaires concentriques et de deux diamètres différents et deux réseaux de détecteurs accrochés chacun à un des rails qui effectuent successivement ou simultanément les mesures. On peut aussi prévoir un système où le réseau de détecteurs est soutenu par un bras muni soit d'un rail permettant d'ajuster la distance entre le réseau de détecteurs et l'axe de rotation soit même de deux rails si le dispositif possède deux réseaux.

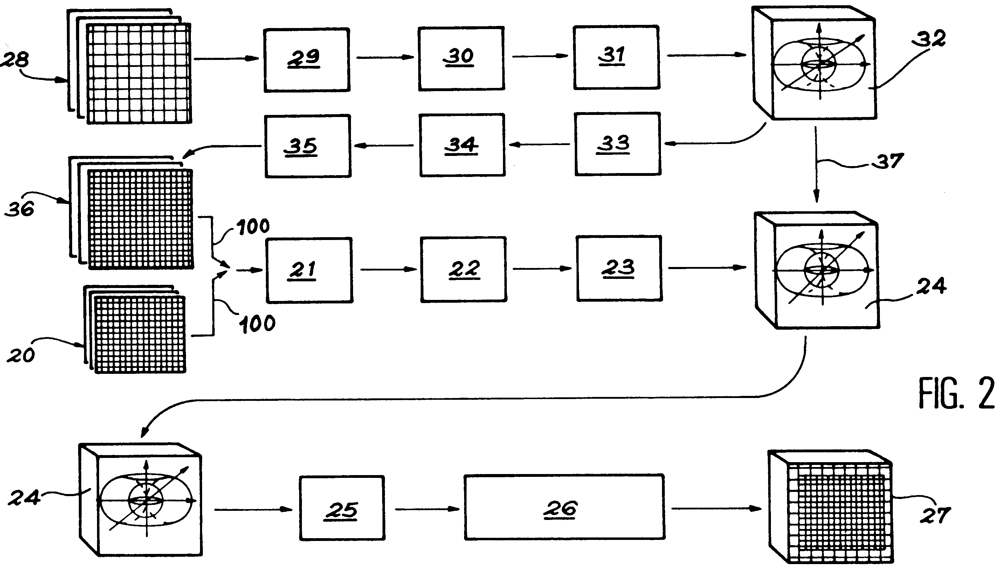

On se reporte à présent à la figure 2. Les mesures consistent à évaluer la somme de l'atténuation du rayonnement sur des rayons R du faisceau utile 10 qui se projettent du point focal S sur les points d'image du réseau de détecteurs 5 ; c'est-à-dire l'atténuation totale du rayonnement sur tous les points de l'objet 1 par lequel chaque rayon R passe, ou le rayonnement total produit par ces mêmes points. Quand des mesures de projections à haute résolution 20 (de la première série de mesures, où l'objet 1 est représenté en traits pleins) ont été effectuées sur un nombre suffisant de ces projections traversant la région d'intérêt 2 de l'objet 1, on a acquis un jeu de projections tronquées sur l'objet et complet que sur la zone d'intérêt. Le jeu de projections ne peut être reconstruit directement en utilisant l'enseignement du brevet antérieur. Il faut d'abord compléter ces projections à partir des mesures complètes sur l'objet (mesures de la deuxième série où l'objet est représenté en traits pointillés). La dérivée première de la transformée de Radon de la première série de mesures est calculée en accomplissant successivement une pondération 21, une différentiation 22, et une sommation et un réarrangement 23 pour parvenir à une description à haute résolution 24 de la dérivée première de la transformée de Radon de la région d'intérêt de l'objet 2. A ce niveau, on calcule comme expliqué plus loin les projections manquantes à la première série d'acquisition que l'on complète et que l'on reconstruit conformément au brevet antérieur pour représenter la région d'intérêt 2 et en fonction des différentes incidences du point focal S pour parvenir à l'image 27 de la région d'intérêt 2.

Toutes ces étapes excepté le calcul des projections manquantes depuis la dérivée première de la transformée de Radon de l'objet sont menées conformément à l'enseignement du premier brevet antérieur mentionné originaire de la même équipe d'inventeurs et qui décrivait comment les images pouvaient être reconstruites par le truchement de la dérivée première de la transformée de Radon de la fonction représentative de l'image, c'est-à-dire de l'atténuation ou de l'émission du rayonnement. La transformée de Radon de la fonction est définie comme l'ensemble des sommes des valeurs locales de la fonction sur les points de chaque plan passant par au moins un point du domaine sur lequel la fonction est définie. Il faut donc calculer des sommes de la fonction sur des plans, ce qui n'est pas difficile à condition de définir les lignes des sommations comme les droites d'intersection des plans avec le réseau de détecteurs : on considère alors la somme des mesures des détecteurs par lesquels passe la ligne de sommation du plan considéré.

Il faut cependant pondérer les mesures des sommes sur les rayons R pour compenser les distorsions produites par les distances différentes des détecteurs 6 au point focal S, ce qui explique l'étape 21, et les réarrangements associés aux sommes de l'étape 23 consistent à passer du système de coordonnées lié aux positions de source au système de coordonnées sphériques du domaine de Radon, ce qui impose des interpolations. Les influences des détecteurs 6 sont donc plus ou moins fortes. Enfin, la différentiation 22 est représentative de la mise en oeuvre des formules (4) et (5) du brevet antérieur qui expriment des dérivations des sommes de la fonction sur des lignes de projection sur le réseau de détecteur 5, c'est-à-dire des calculs de sommes de taux de variation suivant les lignes et les colonnes du détecteur, suivis d'une combinaison linéaire des résultats afin que le contenu de la description à haute résolution 24 porte sur la dérivée première de la transformée de Radon plutôt que sur la transformée elle-même, pour obtenir une meilleure précision. Cette étape de différentiation 22 est cependant facultative.

La description à haute résolution 24 est effectuée dans ce qu'on appelle le volume ou le domaine de Radon qui comprend les points de projection d'une origine unique sur tous les plans sur lesquels la somme de la fonction a été calculée. Ces points de projection de l'origine sont appelés les points caractéristiques des plans, et l'origine est choisie comme origine du repère de définition des images de reconstruction. Il est démontré dans le brevet antérieur que le volume de Radon est un tore centré sur l'origine et formé par la révolution d'un cercle dont un diamètre passe par l'origine et par le point focal S quand ce dernier suit une trajectoire circulaire centrée sur l'origine.

On associe des lors la somme de la fonction sur un plan, ou la dérivée de cette somme calculée selon les indications du brevet antérieur, au point caractéristique du plan. La différentation 25 correspond à celle de la formule (8) du brevet antérieur suivant le rayon reliant l'origine au point considére, et les rétroprojections 26 consistent à faire des sommes des quantités différentiees suivant les formules (8) et (9) pour obtenir la répartition de la fonction. Mais comme on l'a déjà mentionné, l'influence des mesures manquantes liées aux parties de l'objet 1 hors de la région d'intérêt 2 fausse les résultats et entache la qualité de l'image.

C'est pourquoi on utilise d'autres projections obtenues à travers tout l'objet 1 pendant les mesures de projections à basse résolution 28 (de la seconde série de mesures). On procède par des étapes 29, 30 et 31 semblables aux étapes 21, 22 et 23 pour obtenir une description à basse résolution 32 de la dérivée première de la transformée de Radon de tout l'objet 1. Les opérations plus spécialement caractéristiques de l'invention sont alors des pondérations 33, des transformées de Hilbert 34 et des rétroprojections 35 pour transformer la dérivée première de la transformée de Radon de l'objet à basse résolution 32 en calculs de projections à haute résolution 36. Ces projections sont semblables aux mesures de projection à haute résolution 20 car elles expriment des sommes de la fonction sur des rayons qui passent par la trajectoire TS1 du point focal S pendant la première série de mesures. On utilise en fait le mélange des projections mesurées et calculées 20 et 36 pour effectuer les étapes 21 à 26 et obtenir ainsi une image 27 plus exacte. Ce mélange est symbolisé par les flèches 100 sur la figure 2.

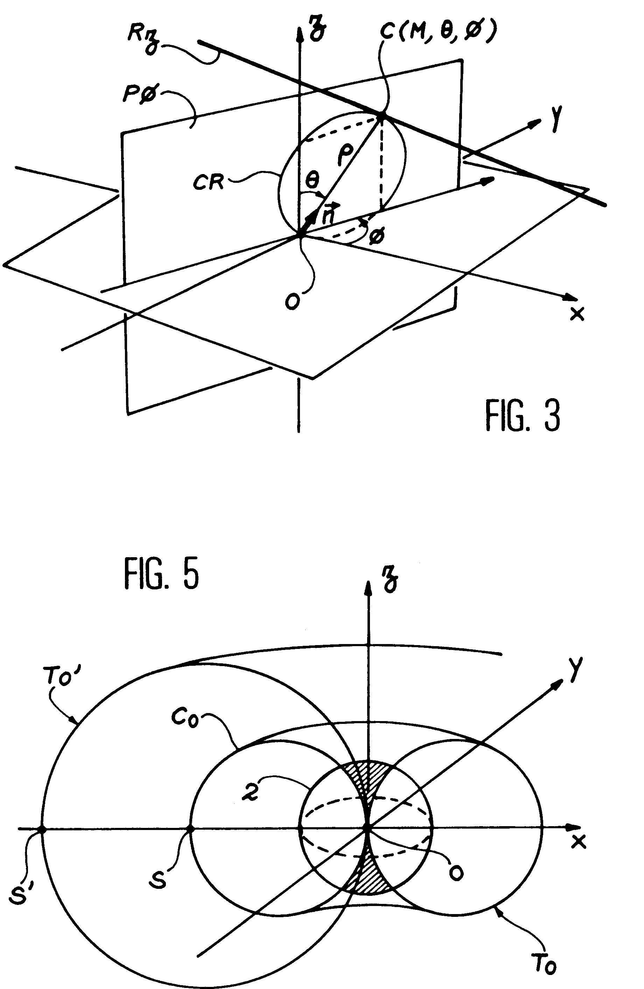

Reportons-nous à la figure 3 pour des explications plus détaillées des étapes 33 à 35. Si z représente l'axe de rotation de l'objet 1 ou du point focal S et x et y deux axes fixes, perpendiculaires au précédent et entre eux, considérons un rayon Rz parallèle au plan Oxy, c'est-à-dire dont tous les points sont à une même ordonnée z. Le rayon Rz est perpendiculaire à un plan auquel appartient l'axe z et qui est situé à la longitude φ par rapport à l'axe x. Ce plan de projection Pφ porte le point C (M, θ, φ) de projection ou d'intersection du rayon Rz, qui peut être défini par rapport à l'origine O et à l'axe z par la colatitude θ et le rayon ρ, soit

$$\vec{OC} = \vec{\rho n}\,.$$

Si f désigne la fonction d'atténuation ou d'émission de rayonnement, la somme $\widetilde{\mathcal{X}}_z$ de cette fonction sur le rayon Rz peut être exprimée par la formule

$$\widetilde{\mathcal{X}}_z f(r,\phi) = \iint\limits_{-\infty}^{\infty} f(x,y,z)\,\delta(x\cos\phi + y\sin\phi - r)\,dx\,dy\,.$$

où δ désigne la fonction de Dirac.

Les inventeurs démontrèrent - dans une publication encore inédite - que cette somme pouvait aussi être exprimée par la formule

$$\widetilde{\mathcal{X}}_z f(r,\phi) = \frac{1}{2\pi} \int_0^\pi \mathcal{HDR} f(z\cos\theta + r\sin\theta, \theta, \phi)\,d\theta$$

où $\mathcal{R}$ désigne la transformée de Radon de la fonction f, $\mathcal{D}$ sa dérivée première et $\mathcal{H}$ la transformée de Hilbert dont l'expression est rappelée par la formule

$$\mathcal{H}g(\rho) = \frac{1}{\pi} \int_{-\infty}^{\infty} \frac{g(\rho')}{\rho - \rho'}\,d\rho'\,.$$

Les points caractéristiques du domaine de Radon sur lesquels la quantité située dans l'intégrale définissant $\widetilde{\mathcal{X}}_z f(r, \phi)$ doit être calculée et additionnée sont situés sur un cercle de rétroprojection CR situé dans le plan méridien Pφ et de diamètre OC. Il est donc possible de calculer la somme de l'atténuation sur le rayon Rz même s'il n'a pas été possible de la mesurer, comme ce rayon passe à l'écart de toutes les positions que le point focal S vient à occuper. De plus, l'application de la formule impose des calculs analogues à ceux de la reconstruction de l'image, ce qui est très pratique.

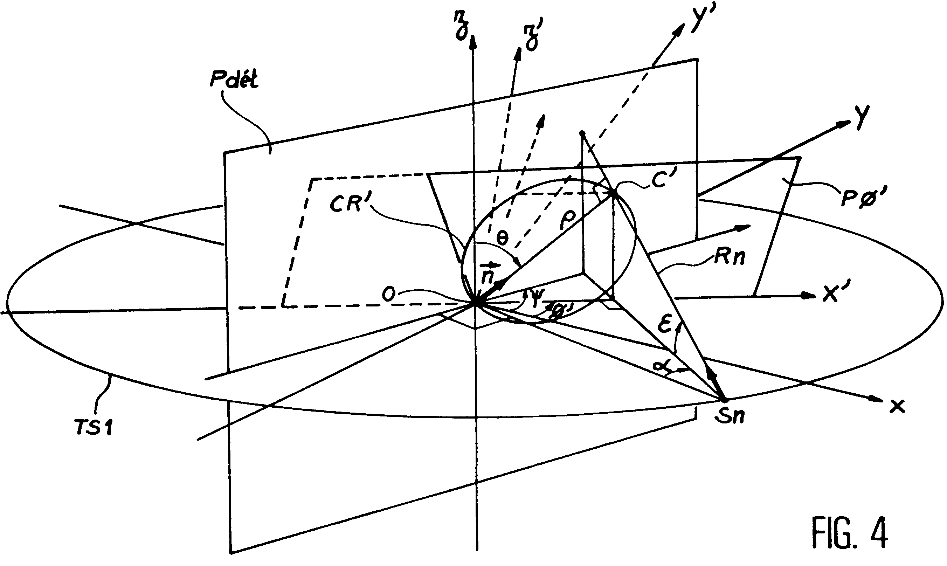

Le rayon Rz considéré était parallèle au plan Oxy. On peut généraliser à un rayon Rn d'orientation quelconque comme on le voit sur la figure 4. Quoique les rayons Rn puissent être choisis librement, on choisit en réalité de n'appliquer la formule qu'à des rayons passant par la trajectoire TS1 du point focal S parcourue pendant la première série de mesure (qu'ils coupent en des points Sn respectifs), pour que les projections calculées 36 puissent immédiatement être combinées aux projections mesurées 20 à haute résolution. Une manière de réaliser cette combinaison est de définir à partir du volume 32 de la dérivée première de la transformée de Radon à basse résolution de l'objet, les points de projection manquant dans les acquisitions 20 de la première série de mesures, et de déterminer les projections en conséquence. Le réseau de détecteurs 5 serait parallèle à un plan de détection Pdét passant par l'origine O pour cette position Sn du point focal, où la projection du plan de détection Pdét sur le plan Oxy parallèlement à l'axe z est distante de l'axe x fixe d'un angle de précession ψ par rapport à l'axe X. La projection du rayon Rn sur le plan Oxy parallèlement à l'axe z fait avec le segment OSn un angle α, le rayon Rn avec ladite projection fait un angle ζ, et φ désigne l'angle entre les perpendiculaires à ladite projection et l'axe x.

Une rotation d'angle φ' autour de l'axe z suivie d'une rotation d'angle ζ autour de l'axe x' transformé de l'axe Ox après la rotation précédente permet d'obtenir un nouveau repère Ox'y'z' suivant la transformation résumée dans la formule :

$$\left[ \begin{array}{c} x' \\ y' \\ z' \end{array} \right] = \left[ \begin{array}{ccc} \cos \phi' & \sin \phi' & 0 \\ -\sin \phi' \cos \xi & \cos \phi' \cos \xi & \sin \xi \\ \sin \phi' \sin \xi & -\cos \phi' \sin \xi & \cos \xi \end{array} \right] \left[ \begin{array}{c} x \\ y \\ z \end{array} \right].$$

La situation est alors la même que dans le cas précédent si ce n'est que le plan Pφ' orthogonal au rayon Rn et qui passe par l'origine O contient les axes x' et z' et est donc incliné, car les points sur lesquels il faut appliquer la formule appartiennent au cercle CR' de diamètre OC', où C' est l'intersection et la projection du rayon Rn sur le plan Pφ', et le cercle CR' appartient au plan Pφ'.

La formule appliquée est alors :

$$\mathcal{X} f(S, A) = \frac{1}{2\pi} \int_0^{\pi} \mathcal{HDR} f(z' \cos \theta' + x' \sin \theta', \theta', \phi') \, d\theta'.$$

C'est pourquoi il est nécessaire d'obtenir d'abord la description à basse résolution 32 de la dérivée première de la transformée de Radon de tout l'objet 1 dans le domaine de Radon associé à la seconde série de mesures. Les formules d'inversion de la dérivée première de la transformée de Radon (formule (6) du brevet antérieur) font apparaître une pondération par un facteur sinθ des valeurs calculées de la dérivée première de la transformée de Radon. Pour réduire le nombre de multiplications à effectuer dans la chaîne de traitemennt de la première série d'acquisition (étapes 21 à 26), ce facteur sinθ peut être introduit dans les facteurs de normalisation utilisés dans les étapes de sommation-réarrangement 31 et 23. Dans ce cas, il est nécessaire d'utiliser une étape de pondération 33 pour diviser les valeurs calculées pondérées de la dérivée première de la transformée de Radon par ce facteur sinθ. Par ailleurs, si nécessaire, cette étape 33 peut aussi être utilisée pour introduire un facteur de normalisation, comme le facteur 1/2π de la formule ci-dessus. Cependant, on aura intérêt à intégrer ce facteur global dans le filtre transformée de Hilbert utilisé à l'étape 34, afin de supprimer cette étape 33 et donc d'accélérer les calculs.

Les calculs suivants sont normalement menés sur des points de calcul situés sur les cercles de rétroprojection CR' avec des répartitions dans les colatitudes θ' qui sont identiques aux répartitions des points caractéristiques de la description à basse résolution 24 dans les colatitudes θ. Ils comprennent, conformément à la formule précédente exprimant $\widetilde{\mathcal{X}f}$ (S,A), les calculs des transformées de Hilbert de ces points à l'étape 34 et les sommes le long des cercles CR' à l'étape 35.

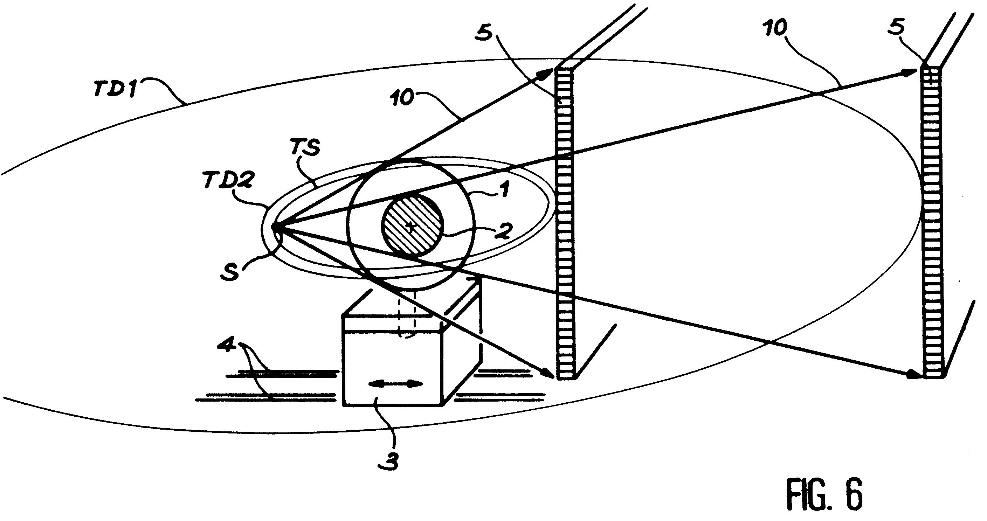

L'utilisation conjointe des projections à haute résolution mesurées et calculées améliore la qualité des images de la région d'intérêt 2, mais il faut ajouter que la description à basse résolution de la dérivée de la transformée de Radon 32 peut encore être utile autrement pour cela, car son contenu peut être directement incorporé à la description à haute résolution 24 de la dérivée de la transformée de Radon de l'objet 1. On le comprendra à l'aide de la figure 5.

Les points caractéristiques des plans dans lesquels on peut calculer la somme de la fonction sont, pour une position unique du point focal S, une sphère dont un diamètre passe par cette position et par l'origine 0 et dont une coupe par un plan passant par l'axe et par le point focal est le cercle Co représenté sur la figure 5, comme on l'a déjà signalé. Pour plusieurs mesures menées le long d'une trajectoire circulaire du point focal S, on peut démontrer que le volume de ces points caractéristiques est un tore To obtenu par la révolution de cette sphère autour de l'axe de rotation, ici z. Si la région d'intérêt 2 est elle-même centrée sur l'origine 0, on voit que les parties proches de l'axe z n'appartiennent pas au tore To et sont donc dans ce qu'on appelle une zone d'ombre dont la contribution des points aux calculs de reconstruction de l'image ne peut pas être évaluée avec exactitude. On peut affecter par convention aux points de la zone d'ombre la valeur de la somme de la fonction associée aux points caractéristiques les plus proches qui appartiennent au tore To, ce que les inventeurs appellent une interpolation d'ordre zéro. Des interpolations plus compliquées sont possibles mais l'invention présente l'intérêt d'obtenir des estimations exactes sur une partie de la zone d'ombre. En effet, les mesures de la seconde série sont menées avec des positions de point focal S' plus éloignées de l'origine O : le tore To' engendré de la même facon est plus gros et plus resserré autour de l'axe z. La zone d'ombre qu'il laisse subsister est donc plus réduite et tend même à devenir nulle quand le point S' est déporté à l'infini, ce qui est le cas si une collimation sensiblement parallèle est décidée pour la seconde série de mesures.

On prélève donc les résultats obtenus pendant la seconde série de mesures pour les incorporer dans la zone d'ombre de la première série sans les transformer.

La flèche 37 symbolise cet enrichissement direct de la description à haute résolution 24 par la description à basse résolution 32.

Une autre réalisation de l'invention, illustrée à la figure 6, est associée à un procédé très simplifié de reconstruction de l'image de la région d'intérêt 2, mais elle ne peut cependant pas toujours être utilisée convenablement, et on recourt alors aux procédés des figures précédentes.

L'originalité de cette dernière réalisation consiste en ce que le point focal S parcourt la même trajectoire pendant les deux séries de mesures. Cela est possible si par exemple le dispositif qui l'émet est lié au bâti 3 dans la réalisation de la figure 1, ou si on dispose de deux collimateurs appropriés pour le réseau de détecteur 5 lorsque le rayonnement est émis par l'objet 1.

Le réseau de détecteurs 5 parcourt les mêmes trajectoires TD1 et TD2 que dans la réalisation de la figure 1. La combinaison des deux séries de mesure est trés simplifiée puisque des rayons de position identique traversent les mêmes points de l'objet 1 au cours des deux séries de mesures : il n'y a plus besoin de reconstituer des rayons fictifs de la première série de mesures par les étapes 29 à 35 et en particulier par les transformées de Radon et de Hilbert.

Le passage du volume 28 au volume 36 se résume alors, pour chaque angle de mesure, à un changement de grille d'échantillonnage, la grille d'échantillonnage du volume 36 ayant souvent des pas d'échantillonnage plus petits que la grille d'échantillonnage du volume 28. Ceci peut être réalisé par des techniques classiques d'interpolation.

On obtient donc finalement outre les projections à haute résolution 20 sur la région d'intérêt de l'objet, des projections à basse fréquence, analogues à 28, sur tout l'objet 1, mais il est possible de les combiner immédiatement aux projections à haute résolution 20 pour appliquer l'algorithme d'inversion des mesures.

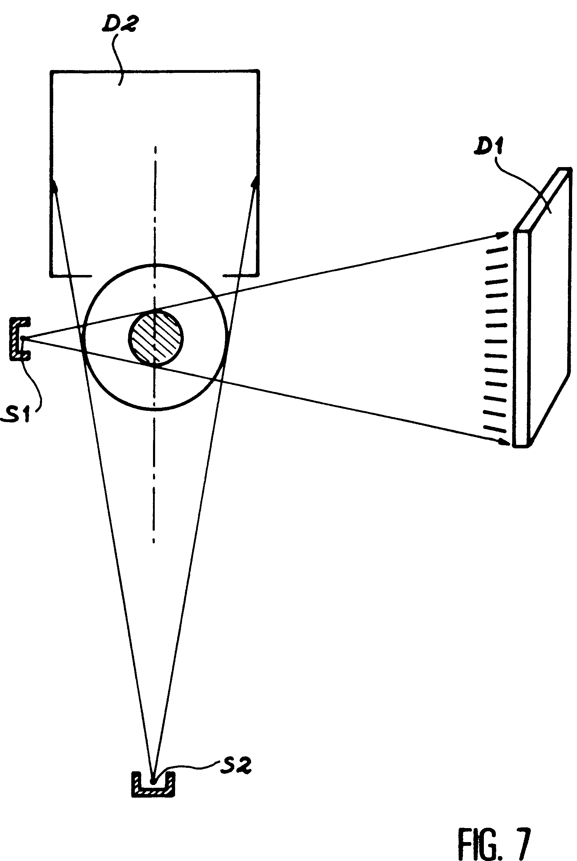

La figure 7 représente une autre réalisation où deux sources 51 et 52 sont simultanément actives pour effectuer les mesures, en combinaison à deux réseaux de detecteurs D1 et D2 qui leur sont respectivement associés. L'une est responsable des mesures à basse fréquence, l'autre des mesures à haute fréquence. De préférence c'est l'objet 1 qui tourne dans une telle réalisation. La combinaison des deux séries de mesures est faite sans changement.

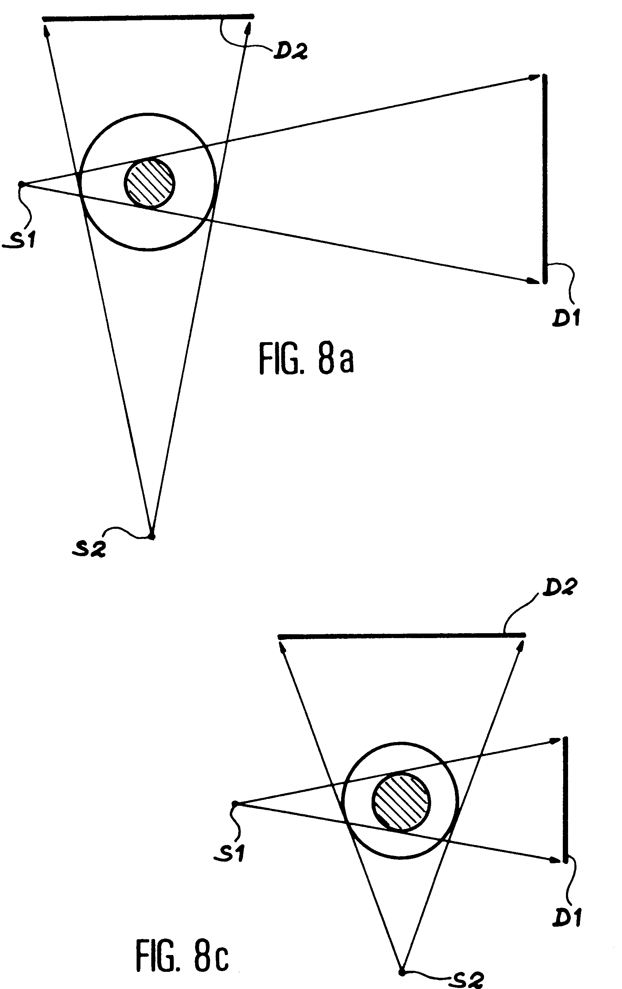

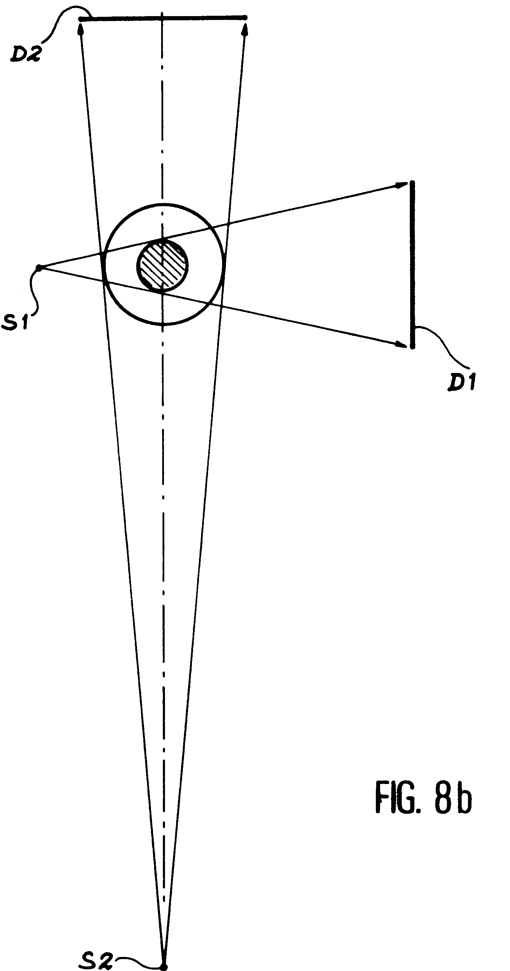

Rappelons que les acquisitions sont réalisées par un système d'acquisition, composé par exemple d'une source X et d'un détecteur X pour les mesures en transmission, ou d'une gamma-caméra et d'un collimateur pour les mesures en émission. Pour accélérer les acquisiions, il sera préférable d'utiliser deux systèmes d'acquisition pour acquérir simultanément les deux séries d'acquisition à basse et à haute résolution, comme décrit sur la figure 7. Plusieurs configurations sont envisageables, en particulier celle où les distances point focal-détecteurs sont constantes (cf figure 8.a), celle où les distances axe de rotation-détecteur sont constantes (cf figures 8.b) et celle où les distances source-axe de rotation sont constantes, mais avec des tailles de détecteur variables (cf figure 8.c). Dans ce troisième cas, on suppose que pour des raisons de faisabilité téchnologique, le grand détecteur a une résolution spatiale moins bonne que le petit.

D'une façon générale, cette approche pourra être généralisée aux dispositifs utilisant deux trajectoires circulaires d'acquisition d'axe commun, comme décrit dans le brevet français 90 14957, ou non, comme décrit dans le brevet français 90 14958, la différence dans le présent brevet étant qu'une des séries d'acquisition est limitée aux projections de la zone d'intérêt.

Cette invention peut être employée dans tous les domaines où on désire reconstruire des images de l'intérieur d'un objet, et notamment la médecine et les contrôles non destructifs de l'industrie.

**Revendications**

1. Procédé de reconstruction d'images tridimensionnelles d'un objet (1) défini par des valeurs prises par une fonction (f) sur des points de l'objet, la fonction étant une propriété d'un rayonnement conique ayant un point focal (S) et passant à travers l'objet, dans lequel deux séries de mesures sont entreprises, chacune des séries de mesures étant menée avec un réseau bidimensionnel (5) de détecteurs (6) de rayonnement orientés vers le point focal, les mesures consistant en des sommes prises par la fonction sur des rayons entre le point focal et les détecteurs et le procédé comprenant un algorithme d'inversion calculant des sommations de la fonction sur des plans passant par l'objet, caractérisé en ce qu'une première des séries est menée de manière que le rayonnement reçu par les détecteurs passe à travers une région d'intérêt de l'objet, l'image reconstruite concernant la région d'intérêt de l'objet, la seconde des séries de mesures est menée de manière que le rayonnement reçu par les détecteurs passe à travers tout l'objet, les mesures de la deuxième série complétant les mesures de la première série avant d'utiliser l'algorithme d'inversion.

2. Procédé suivant la revendication 1, caractérisé en ce que le point focal effectue une première trajectoire proche de l'objet pendant la première série et une seconde trajectoire éloignée de l'objet pendant la seconde série, et les mesures de la seconde série sont réarrangées par des calculs de manière à obtenir des sommes de la fonction calculées suivant des lignes joignant la première trajectoire et passant par l'objet entier, les mesures réarrangées par calcul étant utilisées pour compléter les mesures de la première série.

3. Procédé suivant la revendication 2, caractérisé en ce que les réarrangements comprennent des sommations des mesures sur des plans.

4. Procédé suivant la revendication 3, caractérisé en ce que les réarrangements comprennent le calcul de la dérivée première de la transformée de Radon de la fonction.

5. Procédé suivant l'une quelconque des revendications 2 à 4, caractérisé en ce que les calculs de réarrangement des mesures de la seconde série comprennent une pondération des mesures, une dérivation des sommations suivant des lignes et des colonnes du réseau de détecteurs, une sommation des dérivées des projections pondérées suivant des plans et une combinaison linéaire des résultats obtenus respectivement pour les dérivées suivant les lignes et suivant les colonnes du réseau de détecteurs, un réarrangement, une transformée de Hilbert des sommations dérivées réarrangées et des sommes des transformées de Hilbert des sommations dérivées réarrangées sur des cercles perpendiculaires aux lignes sur lesquelles les sommes de la fonction sont reconstituées, les cercles passant par l'origine et par ces lignes en deux points diamétralement opposés.

6. Procédé suivant les revendications 4 et 5, caractérisé en ce qu'il comprend un enrichissement des resultats de calculs de la dérivée première de la transformée de Radon obtenus sur la première série des mesures avec des résultats de calculs de la dérivée première de la transformée de Radon obtenus sur la seconde série des mesures (étape 37).

7. Procédé suivant la revendication 1, caractérisé en ce que le point focal (S) parcourt une même trajectoire pendant les deux séries de mesures.

8. Installation conçue pour appliquer un procédé conforme à l'une quelconque des revendications précédentes, caractérisée en ce qu'elle comporte des moyens (4, 7) pour faire accomplir deux trajectoires du réseau de détecteurs (5) autour de l'objet (1) à des distances différentes de l'objet.

9. Installation suivant la revendication 8, caractérisée en ce qu'elle comprend deux systèmes de collimation (8) différents pour le réseau de détecteurs.

10. Installation suivant les revendications 8 ou 9, caractérisée en ce que deux systèmes d'acquisition sont utilisées pour acquérir simultanément les deux séries d'acquisition à basse et à haute résolution.

FIG.1

EP 0 588 720 A1

FIG. 2

FIG. 3

FIG. 5

FIG. 4

FIG. 6

FIG. 7

FIG. 8a

FIG. 8c

FIG. 8b

**Office européen des brevets**

# RAPPORT DE RECHERCHE EUROPEENNE

Numero de la demande

**EP 93 40 2253**

## DOCUMENTS CONSIDERES COMME PERTINENTS

| | Catégorie | Citation du document avec indication, en cas de besoin, des parties pertinentes | Revendication concernée | CLASSEMENT DE LA DEMANDE (Int.Cl.5) |
|---|---|---|---|---|
| 1 | A | APPLIED OPTICS<br>vol. 23, no. 22 , Novembre 1984 , USA<br>pages 4105 - 4110<br>OHYAMA ET AL. 'analysis and improvement in region-of-interest tomography'<br>* page 4105, ligne 18 - ligne 25 * | 1 | G06F15/72 |
| 6 | A | PHYSICS IN MEDICINE AND BIOLOGY<br>vol. 37, no. 3 , Mars 1992 , UK<br>pages 549 - 562<br>MANGLOS 'truncation artifact supression in cone-beam radionuclide transmission CT using maximun likehood techniques: evaluation with human subjects.'<br>* abstract *<br>* results * | 1 | |
| 5 | A | NUMERISCHE MATHEMATIK<br>vol. 56, no. 4 , 1989 , WEST GERMANY<br>pages 371 - 383<br>LOUIS AND RIEFER 'incomplete data problems in x-ray computerized tomography.II. Truncated projections and region-of-interest tomography' | | DOMAINES TECHNIQUES RECHERCHES (Int.Cl.5)<br><br>G06F<br>A61B |
| 8 | D,A | IEEE TRANSACTIONS ON MEDICAL IMAGING<br>vol. MI-3, no. 1 , Mars 1984 , USA<br>pages 34 - 40<br>OGAWA ET AL. 'a reconstruction algorithm from truncated projections'<br>* abstract * | 1 | |

Le présent rapport a été établi pour toutes les revendications

| Lieu de la recherche | Date d'achèvement de la recherche | Examinateur |
|---|---|---|
| LA HAYE | 8 Mars 1994 | Perez Molina, E |